# EUROPEAN PATENT SPECIFICATION

(11) **EP 3 231 671 B1**
(45) Date of publication and mention of the grant of the patent: **31.07.2019**
(21) Application number: 15867320.2
(22) Date of filing: 20.11.2015
(51) Int. Cl.: B60R 22/34, B60R 22/28

(54) **WEBBING WINDING DEVICE**
GURTWICKELVORRICHTUNG
DISPOSITIF D'ENROULEMENT DE BANDE

(30) Priority: 08.12.2014 JP 2014247940
(43) Date of publication of application: 18.10.2017
(73) Proprietor: Kabushiki Kaisha Tokai-Rika-Denki-Seisakusho, Niwa-gun, Aichi-ken 480-0195 (JP)
(72) Inventor: FUKUTA, Kenji, Niwa-gun Aichi 480-0195 (JP); MUROMACHI, Tetsushi, Niwa-gun Aichi 480-0195 (JP)
(74) Representative: TBK
(86) International application number: PCT/JP2015/082776
(87) International publication number: WO 2016/093044

(56) References cited:
- WO-A1-2014/131524
- DE-A1-102012 018 264
- JP-A- H09 193 741
- JP-A- 2009 241 878
- JP-A- 2013 107 466
- US-A1- 2013 126 656

## Description

### TECHNICAL FIELD

The present invention relates to a webbing take-up device.

### BACKGROUND ART

JP 2008 001194 A discloses a webbing take-up device provided with: a spool (a bobbin) that is turnably supported and onto which a webbing is taken up; and a stopper (a belt plate) to which one end of the webbing is fixed. According to the spool recited in JP 2008 001194 A, the end portion of the webbing is secured at the spool by a central portion of the stopper engaging with an engaging portion formed in the spool and two end portions (securing portions) of the stopper being set in setting portions formed in the spool.

However, in the structure recited in JP 2008 001194 A, when a load applied to the webbing is transmitted to the spool via the stopper, stress values in periphery portions of the engaging portion and setting portions formed in the spool are raised. In order to reduce these stress values, thicknesses of the periphery portions of the engaging portion and setting portions must be increased, as a result of which the spool is likely to be increased in diameter. US 2013/126656 A1 discloses a webbing take-up device having only one load bracing portion, which is provided at one end portion at one side in a length direction of a stopper member. WO 2014/131524 A1 or DE 10 2012 018264 A1 shows a webbing take-up device, in which a load from the webbing is directly applied to a torsion shaft via a stopper member, i.e., without being applied to a spool.

### SUMMARY OF INVENTION

### TECHNICAL PROBLEM

In consideration of the circumstances described above, an object of the present invention is to provide a webbing take-up device that may suppress an increase in diameter of a spool.

### SOLUTION TO PROBLEM

The object is achieved by a webbing take-up device having the features of claim 1. A webbing take-up device according to the present invention includes: a spool including a webbing insertion hole at which a webbing to be applied to a vehicle occupant is inserted, the webbing being taken up onto the spool, and the spool being turned in a pull-out direction when the webbing is pulled out; a stopper member provided at an end portion of the webbing, the stopper member securing the end portion of the webbing at the spool by engaging with a periphery portion of the webbing insertion hole; and a load bracing portion disposed at a diametric direction inner side of the spool relative to the stopper member, the load bracing portion bracing a load that is applied to the spool from the webbing via the stopper member.

In a webbing take-up device according to the present invention
the stopper member is formed in a long shape whose length direction is along an axial direction of the spool; and the load bracing portion is provided at each of locations of end portions at a length direction one side and another side of the stopper member, which locations oppose the spool in the diametric direction.

In a webbing take-up device according to the present invention: a lock portion is provided at an axial direction one side of the spool, turning of the lock portion in the pull-out direction being limited during an emergency state of a vehicle; a torsion shaft is provided at an axial central portion of the spool, a portion of the torsion shaft serving as a first coupling portion that is coupled to an end portion at an axial direction another side of the spool, another portion of the torsion shaft serving as a second coupling portion that is coupled to the lock portion, and, when the turning of the lock portion is being limited, the torsion shaft allowing turning of the spool in the pull-out direction relative to the lock portion by a load of at least a force limiter load; and a portion of at least one of the first coupling portion and the second coupling portion serves as the load bracing portion.

### ADVANTAGEOUS EFFECTS OF INVENTION

In the webbing take-up device of the present invention, the webbing applied to a vehicle occupant is taken up onto the spool, and the spool is turned in the pull-out direction by the webbing being pulled out from the spool.

In the present invention, because the above-mentioned load bracing portion is provided at the diametric direction inner side of the spool relative to the stopper member, a load applied to the spool from the webbing via the stopper member is braced by the load bracing portion. Therefore, deformation of a periphery portion of the webbing insertion hole due to the periphery portion of the webbing insertion hole being pressed by the stopper member can be suppressed. That is, a rise in stress values produced in the periphery portion of the webbing insertion hole can be suppressed. Thus, with the present invention, an increase in thickness of the periphery portion of the webbing insertion hole may be moderated and an increase in diameter of the spool may be suppressed.

According to the webbing take-up device of the present invention, deformation of the periphery portion of the webbing insertion hole that is pressed by the stopper member may be effectively suppressed by the load bracing portion being provided at each of the locations that oppose, in the diametric direction of the spool, the end portion at the length direction one side of the stopper member and the end portion at the another side.

According to the webbing take-up device of the present invention, an increase in a number of components structuring the webbing take-up device may be suppressed by the load bracing portions being portions of the torsion shaft. Furthermore, the structure of the torsion shaft is simplified by a portion of at least one of the first coupling portion and the second coupling portion serving as the load bracing portion.

### BRIEF DESCRIPTION OF DRAWINGS

Fig. 1 is a front view showing a webbing take-up device.
Fig. 2 is an exploded perspective view showing a spool, a lock portion and a torsion shaft structuring portions of the webbing take-up device shown in Fig. 1.
Fig. 3 is a magnified sectional diagram showing the spool, a stopper member, a webbing and the torsion shaft, cut along line 3-3 in Fig. 1.
Fig. 4 is a magnified sectional diagram showing a section of the webbing take-up device cut along line 4-4 in Fig. 3.

### DESCRIPTION OF EMBODIMENTS

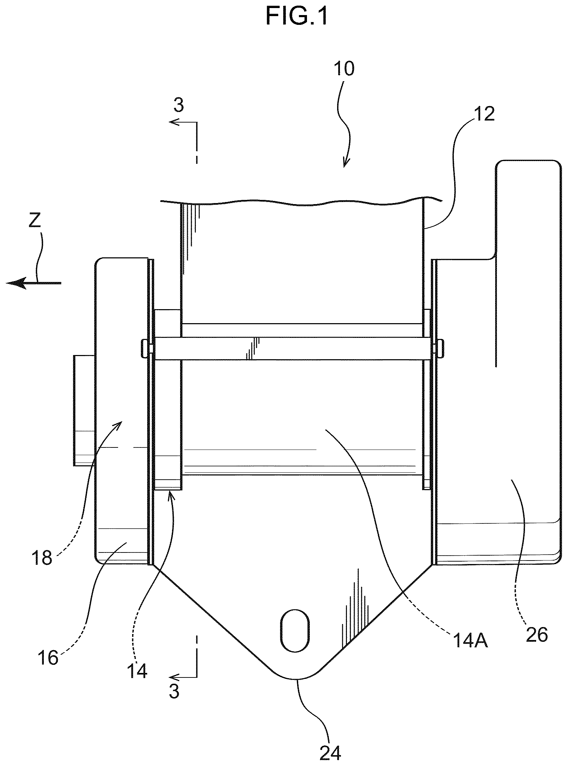

A webbing take-up device according to an exemplary embodiment of the present invention is described using Fig. 1 to Fig. 4. The directions of arrow Z, arrow R and arrow C that are shown as appropriate in the drawings indicate, respectively, an axial direction of the spool, a diametric direction of the spool and a circumferential direction of the spool. Where an axial direction, diametric direction or circumferential direction is referred to herebelow, these refer to the axial direction, diametric direction or circumferential direction of the spool unless specifically stated otherwise.

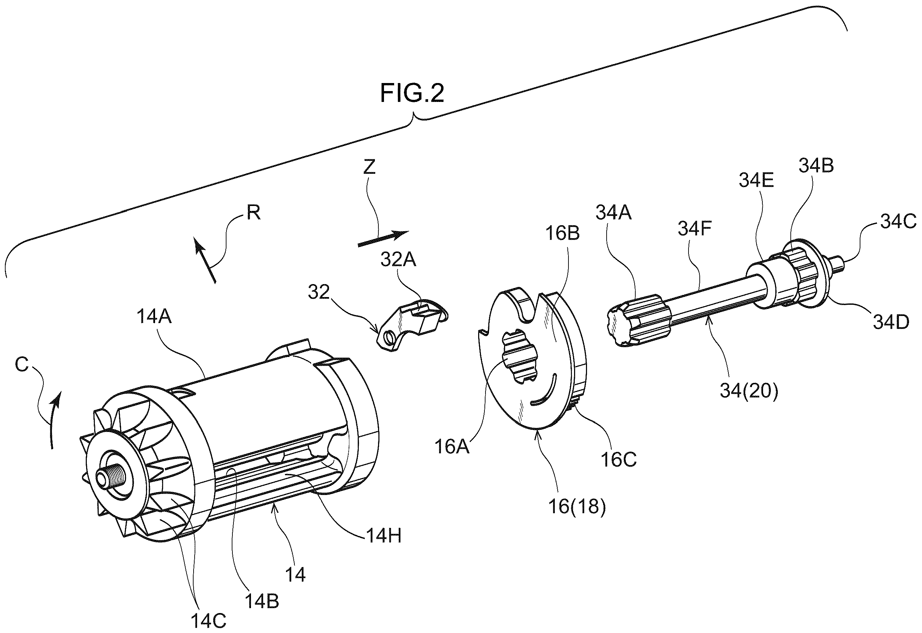

As shown in Fig. 1 and Fig. 2, a webbing take-up device 10 according to the present exemplary embodiment is provided with a spool 14 and a lock mechanism 18. A webbing 12 to be applied to a vehicle occupant is taken up onto the spool 14, and the spool 14 is turned in a pull-out direction by the webbing 12 being pulled out. The lock mechanism 18 is provided to be turnable integrally with the spool 14 and includes a lock portion 16. Turning of the lock portion 16 in the pull-out direction is limited (restricted) during an emergency state of a vehicle. The webbing take-up device 10 is further provided with a force limiter mechanism 20 that, when turning of the lock portion 16 is being restricted, allows turning of the spool 14 in the pull-out direction relative to the lock portion 16 by a load that is at least a force limiter load.

### - Structure of the Spool 14 -

As shown in Fig. 2, the spool 14 is provided with a take-up portion 14A that is formed in a substantially circular rod shape and onto which the webbing 12 is taken up. A webbing insertion hole 14B is formed in the take-up portion 14A. The webbing 12 is inserted into the webbing insertion hole 14B. Viewed from the diametric direction outer side, the webbing insertion hole 14B is formed in a rectangular shape whose length direction is in the axial direction. A dimension of one side opening portion of the webbing insertion hole 14B in the short direction thereof is specified to be smaller toward the axial center of the spool 14.

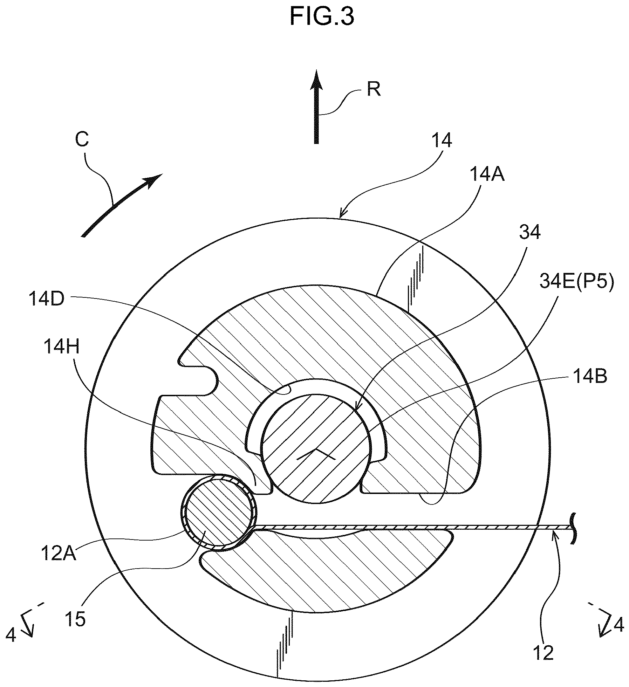

As shown in Fig. 3, a stopper member insertion portion 12A is formed at an end portion of the long direction of the webbing 12. The stopper member insertion portion 12A is formed by the end portion of the long direction of the webbing 12 being folded back and sewn to itself. After the webbing 12 is inserted into the webbing insertion hole 14B, a stopper member 15 is inserted into the stopper member insertion portion 12A of the webbing 12. The end portion of the long direction of the webbing 12 is secured at the spool 14 by the webbing 12 being pulled in the pull-out direction and the stopper member 15 that is inserted into the stopper member insertion portion 12A of the webbing 12 being caught at a periphery portion 14H at the one side opening portion of the webbing insertion hole 14B.

As shown in Fig. 1, the webbing 12 extends to the upper side from a frame 24 at which the spool 14 is turnably supported, and can be applied to a vehicle occupant sitting on a seat (not shown in the drawings) of the vehicle. As shown in Fig. 2, when the spool 14 is turned to a circumferential direction another side (the direction opposite to the direction of arrow C), the webbing 12 is taken up onto the spool 14, and when the webbing 12 is pulled out from the spool 14, the spool 14 is turned to a circumferential direction one side (the direction of arrow C), which is to say the spool 14 is turned in the pull-out direction.

An engaging teeth portion 14C is provided at an end portion at an axial direction another side of the spool 14 (the direction opposite to the direction of arrow Z). The engaging teeth portion 14C constitutes a portion of a pre-tensioner mechanism 26 (see Fig. 1). When there is an emergency state of the vehicle, the pre-tensioner mechanism 26 forcibly turns the spool 14 in the take-up direction of the webbing 12.

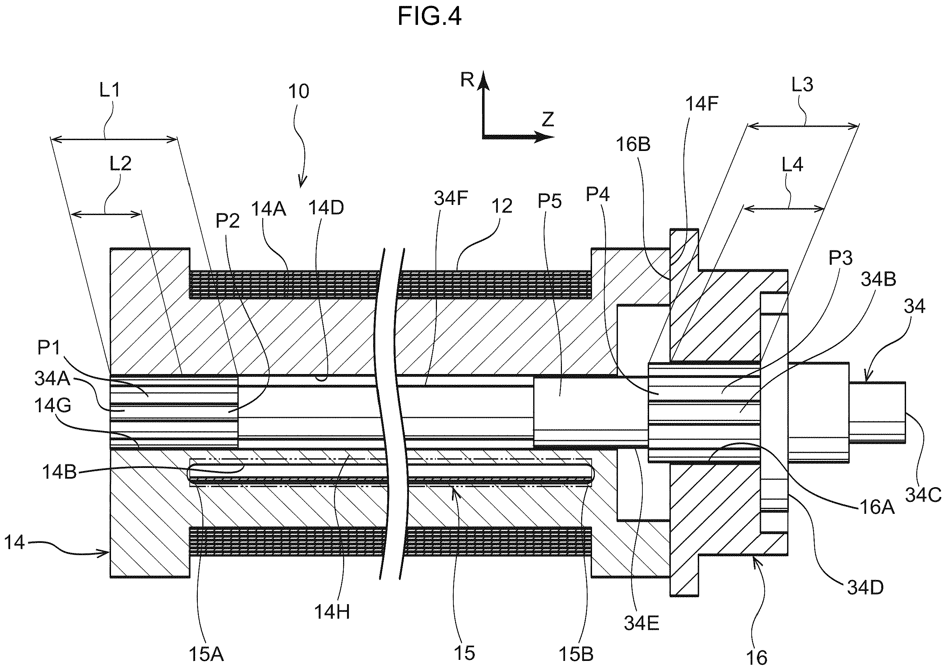

As shown in Fig. 4, a torsion shaft insertion hole 14D is formed at an axial central portion of the spool 14. A torsion shaft 34, which is described below, is inserted into the torsion shaft insertion hole 14D. An inner diameter (a minimum internal diameter) of the torsion shaft insertion hole 14D is set to be slightly larger than an outer diameter of a first serrated portion 34A, which serves as a first coupling portion. The first serrated portion 34A is formed at an end portion at the axial direction another side of the torsion shaft 34. A first serrated portion engaging portion 14G is formed at an end portion at the axial direction another side of the torsion shaft insertion hole 14D. The first serrated portion 34A of the torsion shaft 34 engages with the first serrated portion engaging portion 14G. Seen from the axial direction one side, an inner edge portion of the first serrated portion engaging portion 14G is formed in a shape that corresponds with the shape of an outer edge portion of the first serrated portion 34A. The end portion at the axial direction another side of the torsion shaft 34 and the spool 14 are coupled to be integrally turnable by the first serrated portion 34A of the torsion shaft 34 engaging with the first serrated portion engaging portion 14G. The coupling of the first serrated portion 34A of the torsion shaft 34 with the first serrated portion engaging portion 14G is prevented from disengaging by a first support member, which is not shown in the drawings, that is attached to the spool 14.

### - Structure of the Lock Mechanism 18 -

As shown in Fig. 1 and Fig. 2, the lock mechanism 18 includes the lock portion 16, which is provided at the axial direction one side of the spool 14, and a lock piece 32, which is attached to the lock portion 16.

As shown in Fig. 2, the lock portion 16 is formed in a substantially circular plate shape whose thickness direction is along the axial direction. A first engagement receiving tooth 16C is formed at the lock portion 16. The first engagement receiving tooth 16C engages with ratchet teeth, which are not shown in the drawing, that are provided at the frame 24 (see Fig. 1) during an emergency state of the vehicle (during a collision of the vehicle, when the spool 14 is suddenly pulled out from the webbing 12, there is a sudden deceleration of the vehicle or the like). A second engagement receiving tooth 32A is formed at the lock piece 32. The second engagement receiving tooth 32A also engages with the ratchet teeth. A second serrated portion engaging portion 16A is formed at an axial central portion of the lock portion 16. A second serrated portion 34B, which serves as a second coupling portion, engages with the second serrated portion engaging portion 16A. The second serrated portion 34B is formed at an end portion at the axial direction one side of the below-described torsion shaft 34. The second serrated portion engaging portion 16A penetrates through the axial central portion of the lock portion 16 in the axial direction. Seen from the axial direction one side, an inner edge portion of the second serrated portion engaging portion 16A is formed in a shape that corresponds with the shape of an outer edge portion of the second serrated portion 34B. The end portion at the axial direction one side of the torsion shaft 34 and the lock portion 16 are coupled to be integrally turnable by the second serrated portion 34B of the torsion shaft 34 engaging with the second serrated portion engaging portion 16A. As shown in Fig. 4, in a state in which the webbing take-up device 10 has been assembled, an end face 16B at the axial direction another side of the lock portion 16 abuts against an end 14F at the axial direction one side of the spool 14.

### - Structure of the Force Limiter Mechanism 20 -

As shown in Fig. 4, the force limiter mechanism 20 includes the torsion shaft 34, which is formed in a substantially circular rod shape. The first serrated portion 34A that engages with the first serrated portion engaging portion 14G provided at the spool 14 is formed at the end portion at the axial direction another side of the torsion shaft 34. A dimension L1 of the first serrated portion 34A in the axial direction is set to be longer than a dimension L2 of the first serrated portion engaging portion 14G in the axial direction. Consequently, a portion P1 at the axial direction another side of the first serrated portion 34A engages with the first serrated portion engaging portion 14G and a portion P2 at the axial direction one side of the first serrated portion 34A does not engage with the first serrated portion engaging portion 14G.

The second serrated portion 34B that engages with the second serrated portion engaging portion 16A provided at the lock portion 16 is formed at the end portion at the axial direction one side of the torsion shaft 34. An outer diameter of the second serrated portion 34B is set to be larger than an outer diameter of the first serrated portion 34A. A dimension L3 of the second serrated portion 34B in the axial direction is set to be longer than a dimension L4 of the second serrated portion engaging portion 16A in the axial direction. Consequently, a portion P3 at the axial direction one side of the second serrated portion 34B engages with the second serrated portion engaging portion 16A and a portion P4 at the axial direction another side of the second serrated portion 34B does not engage with the second serrated portion engaging portion 16A.

A portion of the torsion shaft 34 at the axial direction another side relative to the second serrated portion 34B is a rod portion 34E that is formed in a substantially circular rod shape. An outer diameter of the rod portion 34E is set to be slightly larger than the inner diameter (minimum internal diameter) of the torsion shaft insertion hole 14D and to be substantially the same as the outer diameter of the first serrated portion 34A. The outer diameter of the rod portion 34E substantially matches a diameter of valleys of the second serrated portion 34B.

A portion of the torsion shaft 34 between the rod portion 34E and the first serrated portion 34A serves as a twisting portion 34F, which is specified with an outer diameter smaller than the outer diameter of the rod portion 34E.

In the state in which the webbing take-up device 10 has been assembled, the portion P2 at the axial direction one side of the first serrated portion 34A, which serves as a load bracing portion, is disposed to oppose an end portion 15A at a long direction another side of the stopper member 15 in the diametric direction. A portion P5 at the axial direction another side of the rod portion 34E, which also serves as a load bracing portion, is disposed to oppose an end portion 15B at the long direction one side of the stopper member 15 in the diametric direction. Outer periphery faces of the portion P2 at the axial direction one side of the first serrated portion 34A and the portion P5 at the axial direction another side of the rod portion 34E are disposed to be close to inner periphery faces of minimum internal diameter portions of the torsion shaft insertion hole 14D.

A supported portion 34C is provided at the axial direction one side of the torsion shaft 34 relative to the second serrated portion 34B. The supported portion 34C is supported by a second support member, which is not shown in the drawings. A flange portion 34D is provided at a boundary between the supported portion 34C and the second serrated portion 34B. The flange portion 34D has a larger diameter than the second serrated portion 34B. Movement of the torsion shaft 34 to the axial direction another side relative to the lock portion 16 is restricted by the flange portion 34D abutting against the lock portion 16.

### - Operation and Effects of the Present Exemplary Embodiment -

Now, operation and effects of the present exemplary embodiment are described.

As shown in Fig. 1, in the webbing take-up device 10 according to the present exemplary embodiment, the webbing 12 is pulled out from the spool 14 and applied to a vehicle occupant sitting on a seat of a vehicle, which is not shown in the drawings.

As shown in Fig. 1 to Fig. 3, during an emergency state of the vehicle (during a collision of the vehicle or the like), the lock mechanism 18 is activated and thus turning of the lock portion 16 in the pull-out direction is restricted. Consequently, turning of the spool 14 in the pull-out direction relative to the lock portion 16 is limited via the torsion shaft 34, pulling out of the webbing 12 from the spool 14 is limited, and the vehicle occupant is restrained by the webbing 12.

In the state in which turning of the spool 14 in the pull-out direction relative to the lock portion 16 is limited by the torsion shaft 34, if a load acting on the vehicle occupant from the webbing 12 (and a load acting on the webbing 12 from the vehicle occupant) becomes at least a predetermined value (a force limiter load), the twisting portion 34F of the torsion shaft 34 twists and deforms. Thus, turning of the spool 14 in the pull-out direction relative to the lock portion 16 by a load of at least the force limiter load is allowed. Consequently, kinetic energy of the vehicle occupant is absorbed by the deformation of the twisting portion 34F of the torsion shaft 34, and the load acting on the vehicle occupant from the webbing 12 is reduced.

In the present exemplary embodiment, the outer periphery faces of the portion P2 at the axial direction one side of the first serrated portion 34A and the portion P5 at the axial direction another side of the rod portion 34E that are formed at the torsion shaft 34 are close to the inner periphery faces of the torsion shaft insertion hole 14D formed in the axial central portion of the spool 14. Therefore, in the state in which the webbing 12 that was taken up onto the spool 14 has been completely pulled out from the spool 14, if the webbing 12 is pulled further in the pull-out direction, the stopper member 15 installed at the end portion of the webbing 12 presses against the periphery portion 14H of the webbing insertion hole 14B formed in the spool 14. When this happens, the periphery portion 14H of the webbing insertion hole 14B deforms slightly toward the diametric direction inner side. As a result, the inner periphery face of the torsion shaft insertion hole 14D abuts against the portion P2 at the axial direction one side of the first serrated portion 34A and the outer periphery face of the portion P5 at the axial direction another side of the rod portion 34E that are formed at the torsion shaft 34. Therefore, deformation of the periphery portion 14H of the webbing insertion hole 14B due to the periphery portion 14H of the webbing insertion hole 14B being pressed against by the stopper member 15 is suppressed. That is, a rise in stress values produced in the periphery portion 14H of the webbing insertion hole 14B is suppressed. Thus, with the present exemplary embodiment, an increase in thickness of the periphery portion 14H of the webbing insertion hole 14B may be moderated and an increase in diameter of the spool 14 may be suppressed.

In the present exemplary embodiment, the portion P2 at the axial direction one side of the first serrated portion 34A and the portion P5 at the axial direction another side of the rod portion 34E that are formed at the torsion shaft 34 are provided at positions opposing in the diametric direction, respectively, the end portion 15A at the length direction another side and the end portion 15B at the length direction one side of the stopper member 15. Therefore, deformation of the periphery portion 14H of the webbing insertion hole 14B being pressed by the stopper member 15 may be suppressed effectively.

The present exemplary embodiment is a structure in which a load applied from the stopper member 15 to the periphery portion 14H of the webbing insertion hole 14B formed in the spool 14 is braced by a portion of the torsion shaft 34. Therefore, compared to a structure in which an alternative member is additionally provided in order to brace this load, an increase in the number of components structuring the webbing take-up device 10 may be suppressed.

In the present exemplary embodiment, an example is described of a structure in which the load applied from the stopper member 15 to the periphery portion 14H of the webbing insertion hole 14B formed in the spool 14 is braced by a portion of the torsion shaft 34.

## Claims

1. A webbing take-up device (10) comprising:
a spool (14) including a webbing insertion hole (14B) at which a webbing (12) to be applied to a vehicle occupant is inserted, the webbing (12) being taken up onto the spool (14), and the spool (14) being turned in a pull-out direction when the webbing (12) is pulled out;
a stopper member (15) provided at an end portion of the webbing (12), the stopper member (15) securing the end portion of the webbing (12) at the spool (14) by engaging with a periphery portion (14H) of the webbing insertion hole (14B); and
a load bracing portion (P2, P5) disposed at a diametric direction inner side of the spool (14) relative to the stopper member (15), the load bracing portion (P2, P5) bracing a load that is applied to the spool (14) from the webbing (12) via the stopper member (15), wherein:
the stopper member (15) is formed in a long shape whose length direction is along an axial direction of the spool (14); and
the load bracing portion (P2, P5) is provided at each end portion (15B, 15A) at a length direction one side and another side of the stopper member (15), where locations at the load bracing portion (P2, P5) oppose the spool (14) in the diametric direction, and wherein:
a lock portion (16) is provided at an axial direction one side of the spool (14), turning of the lock portion (16) in the pull-out direction being limited during an emergency state of a vehicle;
a torsion shaft (34) is provided at an axial central portion of the spool (14), a portion of the torsion shaft (34) serving as a first coupling portion (34A) that is coupled to an end portion at an axial direction other side of the spool (14), another portion of the torsion shaft (34) serving as a second coupling portion (34B) that is coupled to the lock portion (16), and, when the turning of the lock portion (16) is limited, the torsion shaft (34) allowing turning of the spool (14) in the pull-out direction relative to the lock portion (16) by a load of at least a force limiter load; and
a portion of at least one of the first coupling portion (34A) and the second coupling portion (34B) serves as the load bracing portion (P2, P5).

## Patentansprüche

1. Gewebeaufnahmevorrichtung (10), mit:
einer Spule (14), die ein Gewebeeinsetzloch (14B) umfasst, an dem ein Gewebe (12), das bei einem Fahrzeuginsassen verwendet wird, eingesetzt wird, wobei das Gewebe (12) auf die Spule (14) aufgenommen wird, und wobei die Spule (14) in einer Ausziehrichtung gedreht wird, wenn das Gewebe (12) ausgezogen wird;
einem Stopperelement (15), das an einem Endabschnitt des Gewebes (12) vorgesehen ist, wobei das Stopperelement (15) den Endabschnitt des Gewebes (12) an der Spule (14) sichert, indem es mit einem Randabschnitt (14H) des Gewebeeinsetzlochs (14B) in Eingriff ist; und
einem Laststützabschnitt (P2, P5), der an einer Innenseite in einer diametralen Richtung der Spule (14) bezüglich dem Stopperelement (15) angeordnet ist, wobei der Laststützabschnitt (P2, P5) eine Last stützt, die von dem Gewebe (12) über das Stopperelement (15) auf die Spule (14) aufgebracht wird, wobei:
das Stopperelement (15) in einer langen Gestalt ausgebildet ist, deren Längsrichtung entlang einer Axialrichtung der Spule (14) ist; und
der Laststützabschnitt (P2, P5) an jedem Endabschnitt (15B, 15A) an einer Seite und einer anderen Seite der Längsrichtung des Stopperelements (15) vorgesehen ist, an denen Stellen an dem Laststützabschnitt (P2, P5) der Spule (14) in der diametralen Richtung gegenüberliegen, und wobei:
ein Verriegelungsabschnitt (16) an einer Seite der Axialrichtung der Spule (14) vorgesehen ist, wobei ein Drehen des Verriegelungsabschnitts (16) in der Ausziehrichtung während eines Notfallzustands eines Fahrzeugs begrenzt ist;
eine Torsionswelle (34) an einem axialen Mittelabschnitt der Spule (14) vorgesehen ist, wobei ein Abschnitt der Torsionswelle (34) als ein erster Kupplungsabschnitt (34A) dient, der an einem Endabschnitt an einer anderen Seite der Axialrichtung der Spule (14) gekoppelt ist, ein anderer Abschnitt der Torsionswelle (34) als ein zweiter Kupplungsabschnitt (34B) dient, der mit dem Verriegelungsabschnitt (16) gekoppelt ist, und, wenn das Drehen des Verriegelungsabschnitts (16) begrenzt ist, die Torsionswelle (34) ein Drehen der Spule (14) in der Ausziehrichtung bezüglich dem Verriegelungsabschnitt (16) mit einer Last von mindestens einer Kraftbegrenzerlast ermöglicht; und
ein Abschnitt des ersten Kupplungsabschnitts (34A) und/oder des zweiten Kupplungsabschnitts (34B) als der Laststützabschnitt (P2, P5) dient.

## Revendications

1. Dispositif d'enroulement de sangle (10) comprenant :
un enrouleur (14) comprenant un trou d'insertion de sangle (14B) sur lequel une sangle (12) à appliquer sur un occupant de véhicule est insérée, la sangle (12) étant enroulée sur l'enrouleur (14), et l'enrouleur (14) étant entraîné en rotation dans une direction d'extraction lorsque la sangle (12) est tirée ;
un élément d'arrêt (15) prévu au niveau d'une partie d'extrémité de la sangle (12), l'élément d'arrêt (15) fixant la partie d'extrémité de la sangle (12) au niveau de l'enrouleur (14) en se mettant en prise avec une partie périphérique (14H) du trou d'insertion de sangle (14B) ; et
une partie de consolidation de charge (P2, P5) disposée sur un côté interne dans la direction diamétrale de l'enrouleur (14) par rapport à l'élément d'arrêt (15), la partie de consolidation de charge (P2, P3) consolidant une charge qui est appliquée sur l'enrouleur (14) à partir de la sangle (12) via l'élément d'arrêt (15), dans lequel :
l'élément d'arrêt (15) est formé dans une forme longue dont la direction de longueur est le long d'une direction axiale de l'enrouleur (14) ; et
la partie de consolidation de charge (P2, P5) est prévue au niveau de chaque partie d'extrémité (15B, 15A) d'un côté et de l'autre dans la direction de la longueur de l'élément d'arrêt (15), où les emplacements au niveau de la partie de consolidation de charge (P2, P5) sont opposés à l'enrouleur (14) dans la direction diamétrale, et dans lequel :
une partie de blocage (16) est prévue au niveau d'un côté dans la direction axiale de l'enrouleur (14), la rotation de la partie de blocage (16) dans la direction d'extraction étant limitée pendant un état d'urgence d'un véhicule ;
un arbre de torsion (34) est prévu au niveau d'une partie centrale axiale de l'enrouleur (14), une partie de l'arbre de torsion (34) servant de première partie de couplage (34A) qui est couplée à une partie d'extrémité au niveau de l'autre côté dans la direction axiale de l'enrouleur (14), une autre partie de l'arbre de torsion (34) servant de seconde partie de couplage (34B) qui est couplée à la partie de blocage (16), et lorsque la rotation de la partie de blocage (16) est limitée, l'arbre de torsion (34) permettant la rotation de l'enrouleur (14) dans la direction d'extraction par rapport à la partie de blocage (16) par une charge d'au moins une charge de limiteur de force ; et
une partie d'au moins l'une parmi la première partie de couplage (34A) et la seconde partie de couplage (34B) sert de partie de consolidation de charge (P2, P5).
